Europäisches Patentamt

European Patent Office

Office européen des brevets

(11) Veröffentlichungsnummer: **0 336 352**
**A2**

## (12) EUROPÄISCHE PATENTANMELDUNG

(21) Anmeldenummer: 89105850.5

(22) Anmeldetag: 04.04.89

(51) Int. Cl.⁴: **B23P 13/00**

(30) Priorität: 08.04.88 DE 3811748

(43) Veröffentlichungstag der Anmeldung:
**11.10.89 Patentblatt 89/41**

(84) Benannte Vertragsstaaten:
**AT CH FR GB IT LI NL SE**

(71) Anmelder: Messerschmitt-Bölkow-Blohm
**Gesellschaft mit beschränkter Haftung**
**Robert-Koch-Strasse**
**D-8012 Ottobrunn(DE)**

(72) Erfinder: **Schwarz, Wolfgang**
**Almfeldstrasse 20**
**D-8058 Erding(DE)**
Erfinder: **Joas, Reinhard**
**Attenkofer Strasse 43**
**D-8000 München(DE)**
Erfinder: **Schmid, Peter**
**Waldperlacher Strasse 11**
**D-8000 München 83(DE)**
Erfinder: **Simon, Wolfgang**
**Schumannstrasse 14**
**D-8000 München 80(DE)**
Erfinder: **Bichler, Peter**
**Sonnenleite 17**
**D-8919 Schondorf(DE)**

(54) **Mikrobauelement.**

(57) Die Erfindung betrifft Mikrobauelemente, wie Mikro-Siebe, Mikro-Gitter Mikro-Sensoren oder anderer Mikromeß- oder Mikro- Test- oder Mikro-Träger oder andere Bauelemente mit Mikro-Öffnungen oder Ausnehmungen und möglichst großer freier Oberfläche. Verschiedene Herstellverfahren und Ausgangsmaterialien sind angegeben ebenso wie eine Vorrichtung zur spanenden Bearbeitung.

Bevorzugte Anwendungen für bzw. als fluiddurchlässige Bauelemente in der chemischen Technik, in der physikalischen Technik, in Apparatebau, Elektrotechnik, Meß- und Prüftechnik, Träger für die Zwecke der Biotechnologie oder der medizinischen Forschung.

FIG. 1

# Mikrobauelement

Die Erfindung betrifft Mikrobauelemente, wie Mikro-Siebe, Mikro-Gitter, Mikro-Sensoren oder anderer Mikromeß- oder Mikro-Test- oder Mikro-Träger oder andere Bauelemente mit Mikro-Öffnungen oder Ausnehmungen und möglichst großer freier Oberfläche.

Mikro Bauelemente sind für viele Zwecke gebräuchlich.

Aufgabe der Erfindung ist es, ein Mikrobauelement zu schaffen, das auf einfache und rationelle Weise herstellbar ist, sich für eine Vielzahl von Ausgangsmaterialien eignet und eine breite Anwendungspalette für die Bauelemente schafft.

Gelöst wird diese Aufgabe nach dem Hauptanspruch dadurch, daß ihre Strukturen von den zwei einander gegenüberliegenden Seiten mit den größten Oberflächen des Bauelementekörpers herausgearbeitet sind.

Der wesentlichste Vorteil: Die Herstellungsmöglichkeiten sind erheblich vereinfacht und verbilligt. Eine große Anzahl Materialien ist so jetzt bearbeitbar. Umweltschädigende chemische Ätzmittel entfallen.

Im Ausführungsbeispiel gezeigt sind in

Fig. 1 ein fast fertig bearbeitetes Werkstück (Gitter);

Fig. 2 eine Bearbeitungsvorrichtung mit Mehrfach(Wechsel-)Werkzeug, Arbeitskopf und Robotergreifarm für das Wenden des Werkstücks;

Fig. 3 ein Bearbeitungstisch (x-y-Tisch) als Aufspanntisch für das Werkstück mit zwei Antrieben (Pusher) und Magnethalter im Zentrum anstelle der Vakuumhalterung in Fig. 2.

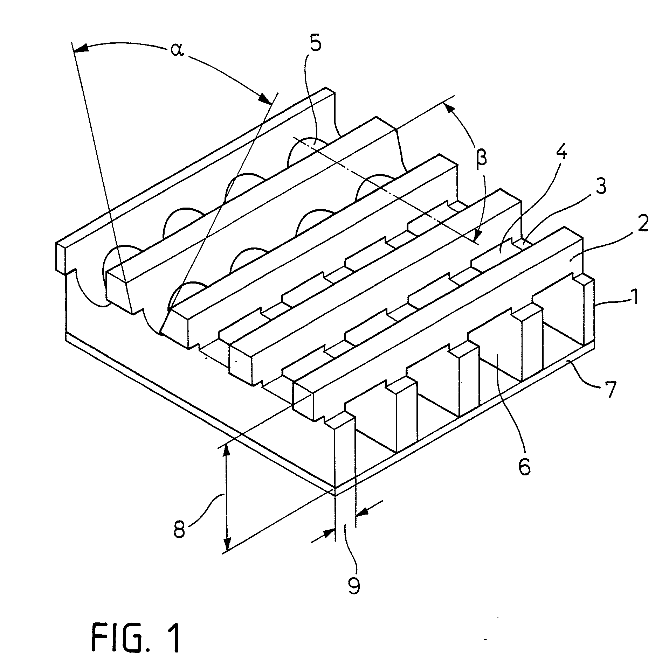

Gemäß Fig. 1 weist ein Mikobauelement einen Körper 1, insbesondere Substratkörper in Form einer Folie oder Platte, z.B. aus einem der o.a. Materialien oder Verbundstoffen hiermit auf. Aus dem Körper 1 ist die Gitterstruktur 2, z.B. wie in der Zeichnung dargestellt und bevorzugt im Oberflächenauslaßbereich spanend herausgearbeitet, und zwar von beiden Seiten des Körpers 1 mit den größten Oberflächen - in der Zeichnung von oben und von unten her. Hierdurch wird eine Strukturierung auch dieser Oberflächen erzeugt. Mit 3 sind eingearbeitete Nuten/Kanäle bezeichnet, mit 4 und 5 Durchbrüche von eckigem oder rundem Querschnitt, mit 6 eine Stützschicht, mit 7 Spalte und mit 8 und 9 die Höhe bzw. die Dicke, die stehenbleibt, bezeichnet. $\alpha$ und $\beta$ beziehen sich auf Winkel (siehe Fig. 1).

Die Herstellung der Siebe und Gitter (Strukturen) ist in einer Vielzahl von Materialien möglich. Die Bearbeitung der Strukturen durch Drehen, Fräsen, Räumen oder Schleifen mit Diamant- oder CBN-Werkzeugen richtet sich nach der jeweiligen Materialauswahl.

Das Ausgangsmaterial wird auf einer entsprechend dem Herstellverfahren ausgewählten Maschine mittels einer Vakuumspannvorrichtung positioniert und durch Vakuum gehalten. Das Bearbeitungsverfahren, Drehen, Fräsen Räumen oder Schleifen bestimmt die Form des Ausgangsmaterials (Folien oder Platten) und gleichzeitig die Verwendung geeigneter Vakuumspannvorrichtungen, z.B. in Zylinder- oder Plattenausführung. Die Werkzeuge für den spanenden Vorgang sind vorzugsweise Mikrodiamant-Formschneiden, polykristalline Diamant-Mikroschneiden, CBN-Werkzeuge und Diamant- oder CBN-Schleifscheiben. Die Oberfläche der auf der Spannvorrichtung gehaltenen Folie/Platte wird durch ein Schneidwerkzeug oder eine Schleifscheibe strukturiert.

Durch die Verwendung von zusammengesetzten, nacheinander angeordneten oder ein mit mehreren Schneiden ausgebildetes Werkzeug (Diamant, PKD, CBN) ist es möglich, eine Vielzahl vun Strukturen gleichzeitig einzuarbeiten. Die einseitig bearbeitete Folie/Platte wird mit einer Stütz schicht versehen. Diese verhindert bei der gewünschten Durchdringung im Strukturbereich eine Gratbildung. Bei Gitterausführungen für Sensoren oder elektrische Leiterbahnen kann diese Schicht als Träger und/oder Isolator verwendet werden. Die einseitig strukturierte und beschichtete Folie/Platte wird mit der bearbeiteten Fläche auf die Spann-/Haltevorrichtung aufgebracht. Die Die spanende Bearbeitung der Kanäle/Nuten erfolgt querverlaufend zu den eingebrachten Strukturen auf der Unterseite. Der winkelige Verlauf der Strukturen auf Ober- und Unterseite liegt zwischen 30° - 90°. Die Abstände und die Tiefe der eingearbeiteten Strukturen sind abhängig von der gewünschten Form und Größe der Durchbrüche. Die Größe der Durchbrüche richtet sich insbesondere nach der Breite und der Überschneidung der eingearbeiteten Strukturen. Die Form der Durchbrüche ergibt sich aus der gewählten Strukturgeometrie (vgl. Fig. 1).

Vorteile:

- Mikrosiebe, Gitterstrukturen oder Sensoren können durch eine beidseitige spanabhebende Bearbeitung der Oberflächen hergestellt werden (zweidimensional).

- Die eingearbeiteten Strukturen überschneiden sich in der Tiefe.

- Die Strukturen an den Oberflächen verlaufen winkelig 30° - 90° zuein ander.

- Die Form der Strukturen (Nuten, Kanäle) ist vorzugsweise rechteckig, halbrund oder spitzwinkelig mit Radius.

- Die Tiefe der Überschneidung sowie die Form am Grund der Nuten bestimmen Geometrie und Größe der Durchbrüche (dreidimensional).
- Die Form der Durchbrüche ist vorzugsweise quadratisch, rechteckig, rund oder oval.
- Die Festigkeit der Siebe kann durch Stützstege erhöht werden, diese sind entsprechend der Struktur an beiden Oberflächen angeordnet.
- Nach Bearbeitung der ersten Oberfläche wird die Struktur mit einer Stützschicht versehen. Schichtdicke < 0,03. Diese kann als gewünschte Isolierung zwischen den Strukturen dienen.
- Bevorzugte Materialien: Al-Leg., Cu-Leg., Ti-Leg., hochfeste, säurebeständige Stähle, Ni-Leg., Molybdän, Edelmetalle wie Gold, Silber, Platin sowie Keramiken und Halbleiter.
- Bevorzugte Abmessungen: Dicke der Siebe/Gitter 0,02 - 0,2 mm Größe der Durchbrüche Durchmesser > 0,005 mm Abstände der Durchbrüche > 0,01 mm Oberfläche < Ra 0,1

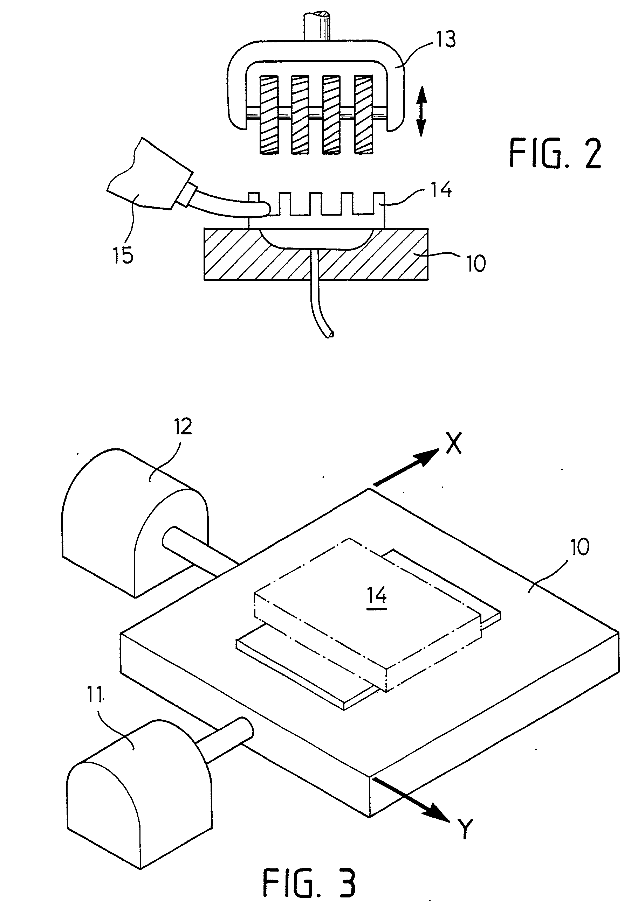

Abwandlungen des Ausführungsbeispiels der Erfindung können vom Fachmann selbstverständlich vorgenommen werden, ohne hierdurch das Prinzip der mechanisch herausgearbeiteten Mikro-Strukturen zu verlassen. Hierzu können auch andere Werkzeuge als o.a. verwendet werden, wenn sie nur einen ausreichend hohen "Feinheitsgrad" oder "Genauigkeit" für die Bearbeitung der Strukturen besitzen; z.B. sind auch bekannte Feinbohrverfahren für die Herstellung der Durchbrüche anwendbar. Rundungen, Gräben oder dgl. können je nach Ausgangsmaterial auch durch Anschmelzen o.ä. gebildet werden. Auch Hochenergiestrahlung z.B. von Lasern ist anwendbar oder die Elektro-Erosion. Kombinations(Wechsel-)Werkzeuge 13 obiger Art und Verfahren sowie deren vorzugsweise automatische Steuerung nach Programm mit Mikroprozessor/Roboter sind bekannt und hier einsetzbar (CIM), z.B. mit Robotergreifarm 15 zum Henden des Werkstücks 14 (siehe Fig. 2).

Anstelle einer Vakuumspannvorrichtung kann ein Magnetspanntisch o.ä. x-y-Tisch 10 verwendet werden. Als Antrieb für einen solchen Spanntisch kann ein piezoelektrischer Motor (inchworm motor) oder Linearmotor (PZT pusher) dienen. Solche Antriebe 11, 12 sind an sich bekannt. Sie arbeiten fast spielfrei und sind in Fig. 3 ersichtlich.

Als Ausgangsmaterial können Halbleiter wie Si, GaAs u.a., Keramiken wie AlN, TiN, $Al_2O_3$, TiC, o.a. Boride, Carbide, Oxide, Nitride, Silizide; Gläser, insbesondere hochschmelzender Art wie Quarzglas ($SiO_2$) oder Verbundstoffe hiermit wie Metallkeramiken, Glaskeramiken, Glasmetalle u.a. einschließlich Mehrschichtverbundstoffe dienen, je nach Anwendungszweck z.B. als Mikro-sieb oder -Gitter oder -Netz für Apparate oder Geräte der physikalischen/chemischen Technik insbesondere Meß- und Analysetechnik bevorzugt aus Metall, Keramik, Glas z.B. für Mikro-Sensoren bevorzugt aus Halbleiter (FETs), Metall, Metallkeramik (Cermet) und z.B. als Träger für biologische Zellen und der Behandlung in der Forschung und z.B. als Katalysatorträger.

Als metallische Ausgangsmaterialien kommen vor allem Al, Cu, Ti, Ni, Stahl, Mo, Edelmetalle u.a. hochfeste und säurebeständige Materialien (nicht ätzbar) in Frage, in Form von Folien, Platten, Blöcken, auch als Mehrschichtverbundstoffe, sowohl untereinander als auch mit den vorerwähnten Ausgangsmaterialien.

Anstelle von Stützschichten (abarbeitbar) können wieder entfernbare Folien, bevorzugt aus Metall, Kunststoff (glasartig), das zu bearbeitende Ausgangsmaterial ein- oder beidseitig bedecken. Diese Folien können auch nach Bearbeitung z.B. als Schutz aufgeklebt werden vor Beginn einer Heiterbehandlung (Wärme-, Aktivatorbeschichtung mit Zellen o.ä. oder leitfähig oder magnetisch oder katalytischer oder Filter-Schicht) und am Schluß abgezogen werden.

Beispiele fertig bearbeiteter Teile sind: Feldeffekt Transistoren, (Grid-)Arrays, Lochplatten, Wabenkörper, Wellplatten, Platten mit Parallel- und Kreuzkanälen, auch stapelbar.

## Ansprüche

1. Mikrobauelemente, wie Mikro-Siebe, Mikro-Gitter, Mikro-Sensoren oder anderer Mikromeß- oder Mikro-Test- oder Mikro-Träger oder andere Bauelemente mit Mikro-Öffnungen oder Ausnehmungen und möglichst großer freier Oberfläche, **dadurch gekennzeichnet,** daß ihre Strukturen (2) von den zwei einander gegenüberliegenden Seiten mit den größten Oberflächen des Bauelementekörpers (1) herausgearbeitet sind.

2. Mikrobauelemente, wie Mikro-Siebe, Mikro-Gitter, Mikro-Sensoren oder anderer Mikromeß- oder Mikro-Test- oder Mikro-Träger oder andere Bauelemente mit Mikro-Öffnungen oder Ausnehmungen und möglichst großer freier Oberfläche, **dadurch gekennzeichnet,** daß ihre Strukturen (2) spanend aus einem Folien- oder Plattenkörper (1) herausgearbeitet sind.

3. Mikrobauelement nach Anspruch 1 oder 2, **dadurch gekennzeichnet,** daß der Körper (1) mit seiner der zu bearbeitenden Oberfläche abgekehrten Seite während der Bearbeitung, insbesondere durch Drehen, Fräsen, Räumen oder Schleifen, in einer Spannvorrichtung festgehalten ist und nach Bearbeitung der ersten Oberfläche gewendet wird.

4. Mikrobauelement nach Anspruch 1, **dadurch gekennzeichnet,** daß vor/nach Bearbeitung der ersten Seite der Oberfläche des Körpers (1) und/oder vor Bearbeitung der zweiten Oberfläche des Körpers dieser mit einer Stützschicht (6) versehen wird.

5. Mikrobauelement nach einem der der Ansprüche 1 bis 4, **dadurch gekennzeichnet,** daß das Material, aus der die Struktur (2) herausgearbeitet wird, ausgewählt ist aus der Gruppe Glas, Keramik, metallische Werkstoffe und/oder Verbundstoffen dieser Materialien.

6. Mikrobauelement nach einem der vorhergehenden Ansprüche, **gekennzeichnet** durch die Verwendung für fluiddurchlässige Bauelemente in der chemischen Technik, in der physikalischen Technik, in Apparatebau, Elektrotechnik, Meß- und Prüftechnik.

7. Mikrobauelement nach einem der Ansprüche 1 bis 5, gekennzeichnet durch die Verwendung als Träger für die Zwecke der Biotechnologie oder der medizinischen Forschung.

8. Vorrichtung zur mechanischen Herstellung von Mikrobauelementen, **gekennzeichnet** durch einen (mittels 11, 12) steuerbaren x-y-Tisch (10), auf dem der (mittels 13) zu bearbeitende Körper (14) festgehalten ist, derart, daß nach Bearbeiten einer ersten Oberfläche das Werkstück (1) mittels Greiferarm (15), insbesondere eines programmgesteuerten Roboters, zum Bearbeiten einer zweiten Oberfläche wendbar ist.

9. Vorrichtung nach Anspruch 8, gekennzeichnet durch die Herstellung von Ausnehmungen, Durchbrüchen, Kanälen im Körper (14) mittels Wechsel-, insbesondere Kombiwerkzeug (13).

FIG. 1

10 454

FIG. 2

FIG. 3